# EUROPÄISCHE PATENTSCHRIFT

(11) **EP 2 906 923 B1**
(45) Veröffentlichungstag und Bekanntmachung des Hinweises auf die Patenterteilung: **21.09.2016**
(21) Anmeldenummer: 13791729.0
(22) Anmeldetag: 11.10.2013
(51) Int. Cl.: G01M 17/007, B60D 1/07, B60D 1/18, B60D 1/24, B60D 1/54, B60D 1/66, G08G 1/16, B60D 1/14

(54) **VERBINDUNGSVORRICHTUNG ZUM VERBINDEN EINES ZIELOBJEKTS MIT EINEM ZUGFAHRZEUG FÜR FAHRVERSUCHE ZUM FUNKTIONSTEST EINES FAHRERASSISTENZSYSTEMS SOWIE ENTSPRECHENDE TESTANORDNUNG**
CONNECTING DEVICE FOR CONNECTING A TARGET OBJECT TO A TOWING VEHICLE FOR TEST DRIVING FOR FUNCTIONALLY TESTING A DRIVER ASSISTANCE SYSTEM AND CORRESPONDING TEST ARRANGEMENT
DISPOSITIF DE LIAISON POUR RELIER UN OBJET CIBLE À UN VÉHICULE TRACTEUR, DANS LE CADRE DE TESTS DE CONDUITE DESTINÉS À TESTER LE FONCTIONNEMENT D'UN SYSTÈME D'AIDE À LA CONDUITE, ET DISPOSITIF DE TEST ASSOCIÉ

(30) Priorität: 15.10.2012 DE 102012109815; 06.11.2012 DE 102012110586
(43) Veröffentlichungstag der Anmeldung: 19.08.2015
(73) Patentinhaber: Continental Safety Engineering International GmbH, 63755 Alzenau (DE)
(72) Erfinder: SCHULTE, Mark, 63500 Seligenstadt (DE)
(74) Vertreter: Büchner, Jörg
(86) Internationale Anmeldenummer: PCT/DE2013/200218
(87) Internationale Veröffentlichungsnummer: WO 2014/059984

(56) Entgegenhaltungen:
- DE-A1- 2 910 910
- DE-U- 7 123 421
- DE-U1- 29 619 702
- DE-U1-202009 008 752

## Beschreibung

Die Erfindung betrifft eine Vorrichtung zum Verbinden eines Zielobjekts mit einem Zugfahrzeug für Fahrversuche zum Funktionstest eines Fahrerassistenzsystems sowie eine Testanordnung bei der diese Vorrichtung zum Einsatz kommt.

Die Fahrzeugsicherheit wurde in den letzten Jahrzehnten durch kontinuierliche Weiterentwicklung passiver Sicherheitselemente stetig erhöht. Neben den passiven Systemen, welche nach einem Unfall die Folgen mindern, gewinnen aktive Sicherheitssysteme zur Unfallvermeidung und Minderung von Unfallfolgen immer mehr an Bedeutung. Um die Unfallfolgen bei einem Auffahrunfall zu reduzieren oder im besten Fall eine Kollision ganz zu verhindern, bieten einige Hersteller sogenannte Assistenzsysteme mit Abstandsregelung und Abstandswarnungen sowie Systeme mit Bremsassistenten bzw. Notbremsassistenten an. Derartige Assistenzsysteme erkennen mittels Radarsensor, Kamera und/oder Laser vorausfahrende Fahrzeuge und warnen den Fahrer bei einer drohenden Kollision. Diese Fahrerassistenzsysteme basieren also in der Regel auf einer umgebungserfassenden Sensorik. Reagiert der Fahrer nicht auf diese Warnung und ist eine Kollision unvermeidlich, leitet das System automatisch eine autonome Bremsung ein. Die Aufprallgeschwindigkeit wird reduziert oder der Unfall kann sogar ganz verhindert werden. Weiterhin sind aus dem Bereich der aktiven Sicherheitssysteme ebenfalls solche bekannt, welche das Fahrzeug bei Erkennen einer Kollision autonom um ein Hindernis herumlenken, d.h. Systeme, die ein autonomes Ausweichmanöver durchführen.

Die Erfindung betrifft im Wesentlichen eine Testanordnung für Fahrversuche, bei welcher ein Zielobjekt hinter einem Zugfahrzeug gezogen werden kann, insbesondere um die vorangehend genannten Sicherheits- und Assistenzsysteme zu testen. Dabei kann insbesondere ein Auffahrunfall mit einem Testfahrzeug auf das Zielobjekt nachgestellt werden. Die Erfindung betrifft dabei insbesondere eine Vorrichtung zum Verbinden des Zielobjekts mit dem Zugfahrzeug. Es kann dabei ein beliebiges Zielobjekt (Target), vorzugsweise eine leichte und relativ weiche Fahrzeugattrappe (z.B. ein sogenanntes Baloon-Car auf Laufrollen bzw. Rädern), mittels der Verbindungsvorrichtung mit dem Zugsfahrzeug verbunden und hinter diesem hergezogen werden.

Ein bekanntes System gibt es derzeit vom ADAC (Allgemeiner Deutscher Automobil-Club e. V.). Hier verfährt ein Schlitten auf einem Leiterrahmen aus Stahl, welchen das Zugfahrzeug hinter sich herzieht. Auf dem Schlitten ist das Zielobjekt angeordnet. Durch den Schlitten wird die Masse mit der das Testfahrzeug kollidiert jedoch erheblich erhöht, insbesondere da der Aufbau steif ist und der Schlitten ein Vielfaches von dem wiegt, was das eigentliche Testobjekt wiegt. Dadurch wird das Risiko einer Beschädigung am Testfahrzeug erhöht. Die steife Schiene verhindert außerdem ein gefahrloses Ausweichen des Testfahrzeugs nach erfolgter Kollision, da sich die Schiene nach dem Verschieben des Schlittens unter dem Testfahrzeug befindet. Dies stellt ein hohes Risiko für die Testfahrer da und verhindert gleichzeitig die Einsetzbarkeit zum Testen von (Not-)Ausweichsysteme.

Aus der DE 71 23 421 U1 ist ein Abschleppballon zum Abschleppen eines Kraftfahrzeugs bekannt, bei welchem der Abschleppballon im entleerten Zustand dank geringer Abmaße leicht im Fahrzeug mitgeführt, durch Aufpumpen des Abschleppballons jedoch funktionsbereit gemacht werden kann und die elastische Hülle zudem Stöße zwischen Abschleppfahrzeug und abzuschleppendem Fahrzeug in gewissen Grenzen puffernd aufnehmen kann. Dabei ist der Abstand zwischen Zugfahrzeug und abzuschleppendem Fahrzeug jedoch sehr gering und bis auf geringe Änderungen bei Stößen im Wesentlichen konstant, kann insbesondere bei einem Aufprall eines anderen Fahrzeugs auf das abzuschleppende Fahrzeug keinesfalls genügend Sicherheitsabstand zum Zugfahrzeug bieten.

Ein weiteres Abschleppseil der Stand der Technik wird beschreiben in dem Dokument DE2910910.

Der Erfindung liegt die Aufgabe zugrunde, eine Vorrichtung für eine Testanordnung anzugeben, mit welcher ein Zielobjekt mit einem Zugfahrzeug verbindbar ist, wobei vorzugsweise die vorangehend genannten Nachteile bekannter Testanordnungen vermieden werden und mit denen insbesondere auch Ausweichsysteme getestet werden können.

Diese Aufgabe wird durch die Merkmale der unabhängigen Ansprüche gelöst. Vorteilhafte Ausgestaltungen und Weiterbildungen sind Gegenstand von Unteransprüchen, wobei auch Kombinationen und Weiterbildungen einzelner Merkmale miteinander denkbar sind.

Ein wesentlicher Gedanke der Erfindung ist es, die Verbindung bzw. die Verbindungsvorrichtung zwischen Zugfahrzeug und Zielobjekt flexibel zu gestalten, insbesondere bis zu einem gewissen Grad flexibel. Der Abstand vom Zugfahrzeug zum Zielobjekt, d.h. insbesondere die Länge der Verbindungsvorrichtung, kann dabei an die Testgeschwindigkeiten angepasst.

Die Verbindungseinrichtung soll insbesondere die folgenden Anforderungen erfüllen:
- Ziehen des Zielobjekts - Zugkräfte
- Konstanten Abstand zwischen Zielobjekt und Zugfahrzeug, vorzugsweise auch bei (Voll-)Bremsung des Zugfahrzeugs, gewährleisten
- Im Kollisionsfall nachgiebig sein und die Annäherung von Zielobjekt (Target) und Zugfahrzeug zulassen

Die erfindungsgemäße Vorrichtung umfasst hierzu wenigstens zwei deformierbare Schläuche, welche quer zur Längsrichtung mittels wenigstens eines Verbindungselements miteinander verbunden sind. Die Schläuche sind dabei bevorzugt über geeignete Mittel endseitig, d.h. an seinen beiden Enden, mit einem Zugfahrzeug und einem Zielobjekt verbindbar bzw. verbunden, so dass sich der wenigstens eine Schlauch entlang seiner Länge zwischen dem Zugfahrzeug und dem Zielobjekt erstreckt. Die Schläuche bzw. deren Innenvolumen ist dabei weiterhin hydraulisch oder pneumatisch mit Druck beaufschlagbar bzw. beaufschlagt.

Die erfindungsgemäße Vorrichtung dient insbesondere zum Verbinden eine Zielobjektes mit einem Zugfahrzeug im Rahmen von Fahrversuchen, bei denen kollisionsnahe oder kollisionsbehaftete Fahrsituationen zwischen einem Testfahrzeug und dem Zielobjekt nachgestellt werden. Das Zielobjekt wird dabei während der Fahrversuche vorzugsweise bewegt, insbesondere derart, dass es hinter dem Zugfahrzeug hergezogen wird. Die Schläuche dienen in diesem Zusammenhang im Wesentlichen zur Übertragung von Beschleunigungskräften vom Zugfahrzeug auf das Zielobjekt, d.h. überträgt positive Beschleunigungskräfte und Druckkräfte, d.h. negative Beschleunigungskräfte bzw. Bremskräfte, vom Zugfahrzeug auf das Zielobjekt.

Der Schlauch dient somit insbesondere dazu, die Distanz zwischen dem Zugfahrzeug und Zielobjekt bei gleichzeitiger Spurstabilität konstant zu halten. Dazu umfasst die Vorrichtung zumindest zwei, also insbesondere zwei oder drei, generell denkbar aber auch noch mehrere, insbesondere nebeneinander angeordnete, deformierbare Schläuche, welche quer zur Längsrichtung (7) mittels wenigstens eines Verbindungselements (8) miteinander verbunden sind. Eine solche Anordnung hat gegenüber nur einem Schlauch eine deutlich höhere Querstabilität.

Die Schläuche stellen dabei bevorzugt zumindest teilweise, d.h. zumindest auf einem Teilabschnitt der gesamten Verbindung zwischen Zugfahrzeug und Zielobjekt, die einzige Verbindungseinrichtung zwischen Zugfahrzeug und Zielobjekt und damit die einzige Einrichtung zur Übertragung der Beschleunigungskräfte dar.

Die erfindungsgemäße Vorrichtung hat verschiedene Vorteile gegenüber den bislang eingesetzten Vorrichtungen zum Verbinden eines Zielobjektes mit einem Zugfahrzeug im Rahmen von Fahrversuchen.

Aufgrund der Verwendung pneumatisch oder hydraulisch beaufschlagter, deformierbarer Schläuche ist die Vorrichtung im Wesentlichen steif gegenüber Zugkräften. Wenn überhaupt, dann kommt es nur zu verhältnismäßig geringen Ausdehnungen des Schlauches während Beschleunigungsvorgängen. Dadurch können positive Beschleunigungskräfte konstant vom Zugfahrzeug auf Zielobjekt übertragen werden.

Die Schläuche sind gleichzeitig insbesondere bis zu einem gewissen Grad steif gegenüber Druckkräften. Bei negativen Beschleunigungen bis zu einer vorgegebenen Belastung, d.h. bei Bremsvorgängen des Zugfahrzeugs, kommt es bei ausreichend hohem Druck im Schlauchinnenvolumen weder zu Stauchungen noch zum Wegknicken und/oder zu Biegungserscheinungen des Schlauches bzw. der Schläuche. Dadurch können bis zu einem gewissen Grad auch negative Beschleunigungen (Bremsen) vom Zugfahrzeug auf das Zielobjekt insbesondere direkt übertragen werden.

Ein weiterer Vorteil besteht darin, dass ab einer bestimmten Belastung, insbesondere einem Aufprall eines Testfahrzeugs auf das Zielobjekt, die mehreren Schläuche ihre Stabilität/Steifigkeit verlieren.

Das ist besonders bei einem Aufprall des Testfahrzeugs auf das Zielobjekt der Fall, d.h. bei einem kollisionsbehaftete Fahrversuch mit entsprechend hoher Differenzgeschwindigkeit zwischen Zielobjekt und Testfahrzeug. Dabei kommt es in der Regel zum Wegknicken bzw. Biegen des einen oder der mehreren Schläuche und dadurch zum Stauchen der gesamten Vorrichtung.

Die Konstruktion, d.h. die erfindungsgemäße Vorrichtung ist somit ausreichend steif, um sowohl Beschleunigungen als auch Verzögerungen des Zugfahrzeugs auf das Zielobjekt zu übertragen, beispielweise bis zu einer Belastungsgrenze von bspw. 1g - aber dennoch elastisch genug, um im Falle einer Kollision des Testfahrzeugs mit dem Zielobjekt und damit die 1g-Grenze deutlich überschreitender Belastungen wegzuknicken. Dadurch können, insbesondere bei kollisionsbehaften Fahrversuchen, hohe Aufprallkräfte abfangen und kompensiert werden, wobei bestenfalls keine Schäden am Testfahrzeug, dem Zugfahrzeug und Zielobjekt entstehen, zumindest aber Kollisionen mit dem Zugfahrzeug vermieden werden. Das trägt gleichzeitig dazu bei, dass die Gefahren für die Fahrer vom Zugfahrzeug und Testfahrzeug reduziert werden.

Durch das Zusammenschieben bzw. Wegknicken der deformierbaren Schläuche ist ein Verlassen der Fahrspur durch das Testfahrzeug gefahrlos möglich, insbesondere auch noch nach einer erfolgten Kollision.

Durch das Zusammenschieben bzw. Wegknicken der deformierbaren Schläuche bzw. der gesamten Verbindungsvorrichtung verbleiben insbesondere keine Elemente unter dem Testfahrzeug, wie es z.B. bei den bekannten Systemen der Fall ist.

Weitere, teilweise schon erwähnte, Vorteile der Erfindung, insbesondere der erfindungsgemäßen Verbindungsvorrichtung sind:
- Geringes Gewicht
- Keine festen (starren) Elemente im Kollisionsbereich
- Ausweichen nach erfolgter Kollision ist gefahrlos möglich
- Einsetzbarkeit für Fahrversuche mit autonomen Brems- und Ausweichsystemen
- Durchführbarkeit von Fahrversuchen inkl. maximaler Zielobjektverzögerung von ca. 1g (g=Erdbeschleunigung)
- Keine Radarbeeinflussenden Bauteile im Bereich des Zielobjekts

Bei dem Zielobjekt kann es sich im Rahmen der Erfindung generell um jede zweidimensionale oder dreidimensionale Nachbildung eines beliebigen Verkehrsteilnehmers handeln, insbesondere eines Fahrzeugs, Fahrradfahrers, Tieres und/oder einer menschlichen Person. Das Zielobjekt kann darüber hinaus mit einem oder mehreren Sensoren ausgestaltet sein, die beispielsweise Belastungen messen, die während eines Fahrversuches auf das Zielobjekt einwirken, insbesondere im Falle einer Kollision mit einem Testfahrzeug. Bei dem Zielobjekt handelt es sich vorzugsweise um ein sogenanntes Balloon Car, wie es für Fahrversuche eingesetzt wird, d.h. um eine Fahrzeugattrappe, die auf Rädern oder Rollen über den Fahrbahnuntergrund geführt werden kann.

Bei dem Zugfahrzeug und auch bei dem Testfahrzeug handelt es sich bevorzugt um Personenkraftwagen. Beide Fahrzeuge können dabei für den öffentlichen Straßenverkehrs zugelassene Kraftfahrzeuge sein. Das Testfahrzeug ist dabei vorzugsweise mit wenigstens einem Sicherheitssystem bzw. (Fahrer-) Assistenzsystem ausgestattet, insbesondere mit einem der einleitend genannten Systeme, welches im Rahmen von Fahrversuche getestet werden.

Unter einem deformierbaren Schlauch können im Rahmen der Erfindung sämtliche schlauchartige Körper verstanden werden, insbesondere flexible Körper, deren Längenabmessung größer ist als deren Breite- und Höhenabmessungen und die mit einem hohlen Innenvolumen ausgebildet sind, welches sich über die Länge des Körpers erstreckt. Unter einem Schlauch ist insbesondere ein schmaler und langer, tubusförmiger sowie flexibler Körper zu verstehen, mit einem zylindrischen Innenvolumen. Der Schlauch ist dabei insbesondere derart ausgebildet, dass dieser zur Aufnahme und/oder Förderung von flüssigen, gasförmige und festen Stoffen geeignet ist, insb. unter einem höheren Druck, als dem Umgebungsdruck. Der Schlauch kann dabei endseitig mit Kupplungen und/oder Ventilen ausgebildet sein, zum Einleiten von Stoffen in das Innenvolumen und zum Verschließen des Innenvolumens.

Unter einem deformierbaren Schlauch ist insbesondere ein flexibler, biegsamer bzw. elastisch deformierbar Schlauch zu verstehen.

Unter einer pneumatischen Beaufschlagung mit Druck ist insbesondere eine pneumatische Beaufschlagung mittels Druckluft oder einem anderen gasförmigen Medium zu verstehen, unter der hydraulischen insbesondere eine Beaufschlagung mittels Wasser oder einem anderen flüssigen Medium.

Unter den geeigneten Mitteln zur endseitigen Verbindung der Vorrichtung, insbesondere des einen oder der mehreren deformierbaren Schläuche, können sämtliche Mittel verstanden werden, die geeignet sind, um die erfindungsgemäße Vorrichtung endseitig mit dem Zugfahrzeug und dem Zielobjekt zu verbinden. Darunter fallen beispielswiese Haken, Ösen, Klemmelemente etc. Die Vorrichtung kann beispielsweise an einem Ende mit einer Öse zum Einhängen in eine Anhängerkupplung des Zugfahrzeugs und am anderen Ende mit einer Aufnahme, z.B. einem Rollwagen oder Rollschlitten, zur Anordnung unterschiedlicher Zielobjekte ausgebildet sein. Umfasst die Vorrichtung mehrere parallel nebeneinander angeordnet deformierbare Schläuche können diese zusätzlich endseitig über eine geeignete Einrichtung mit einander gekoppelt und die Einrichtung wiederum mit dem Zugfahrzeug bzw. dem Zielobjekt über geeignete Mittel verbindbar ausgestaltet ein.

Gemäß einer bevorzugten Ausgestaltung der erfindungsgemäßen Vorrichtung handelt es sich bei dem wenigstens einen deformierbaren Schlauch um einen Druckschlauch. Ein Druckschlauch besteht in der Regel aus Kunstfasergewebe (Polyester) und ist innen gummiert. Er hat im Allgemeinen eine flexible Form und kann flach zusammengefaltet werden, wenn er nicht unter Druck steht. Dies hat den Vorteil, dass er sich platzsparend transportieren lässt.

Gemäß einer weiteren bevorzugten Ausgestaltung umfasst die erfindungsgemäße Vorrichtung zwei deformierbare Schläuche, die in Längsrichtung, d.h. entlang ihrer Länge, nebeneinander, insbesondere parallel zueinander, angeordnet und quer zur Längsrichtung mittels wenigstens eines steifen Verbindungselements miteinander verbunden sind. Bevorzugt sind die zwei Schläuche dabei in einem definierten Abstand zueinander parallel angeordnet, wobei insbesondere das wenigstens eine steife Verbindungselement dafür sorgt dass der Abstand konstant gehalten wird.

Gemäß einer besonderen Ausgestaltung umfasst die erfindungsgemäße Vorrichtung drei deformierbare Schläuche, die in Längsrichtung nebeneinander, insbesondere parallel zueinander, angeordnet und quer zur Längsrichtung mittels wenigstens eines steifen Verbindungselements miteinander verbunden sind. Bevorzugt sind die Schläuche dabei in einem definierten Abstand zueinander parallel angeordnet, wobei insbesondere das wenigstens eine steife Verbindungselement dafür sorgt dass der Abstand konstant gehalten wird. Weiterhin sind die deformierbaren Schläuche bevorzugt derart zueinander angeordnet sind, dass diese in der Ebene quer zur Längsrichtung ein Dreieck aufspannen. Das bedeutet, dass die Schläuche in der Ebene senkrecht zur Längsrichtung Eckpunkte eines angenommenen Dreiecks darstellen.

Bei Ausgestaltung der erfindungsgemäßen Vorrichtung mit zwei oder mehr deformierbaren Schläuchen, die entlang ihrer Länge nebeneinander angeordnet sind, sind diese bevorzugt mittels mehrerer steifer Verbindungselemente quer zur Längsrichtung verbunden, wobei die Verbindungselemente in Längsrichtung in vorgegebenen Abständen zueinander zwischen den deformierbaren Schläuchen angeordnet sind. Die Größe der Abstände definiert dabei auch Schwachstellen und damit bevorzugte Abknickpunkte der Schläuche.

Gemäß einer vorteilhaften Ausgestaltung der erfindungsgemäßen Vorrichtung sind der eine oder die mehreren Schläuche und/oder eines oder mehrere der Verbindungselemente mit Laufrollen und/oder Gleitelementen ausgestaltet. Die Laufrollen bzw. die Gleitelemente dienen dabei insbesondere dazu, ein Durchhängen und Durchscheuern der Schläuche auf dem Fahrbahnuntergrund zu vermeiden.

Bei Ausgestaltung der erfindungsgemäßen Vorrichtung mit zwei oder mehr deformierbaren Schläuchen, sind diese gemäß einer weiteren vorteilhaften Ausgestaltung als Schlauchverbund ausgestaltet sind. Das bedeutet, dass die Schläuche vorzugsweise ohne Abstand parallel zueinander angeordnet und miteinander verbunden sind. Die Schläuche können dabei beispielsweise mittels geeigneter Mittel zu einem Bündel zusammengebunden sein.

Die erfindungsgemäße Testanordnung umfasst ein Zugfahrzeug und ein Zielobjekt und dient zur Durchführung von Fahrversuchen, insbesondere von kollisionsnahen und kollisionsbehafteten Fahrversuchen zwischen einem Testfahrzeug und dem Zielobjekt. Das Zielobjekt ist dabei mittels einer Vorrichtung nach einer der vorangehend genannten Ausgestaltungen ausgebildet.

Die Testanordnung kann in einer vorteilhaften Ausgestaltung zusätzlich mit zwei oder mehr Führungsseilen ausgestaltet sein, die zwischen dem Zugfahrzeug und dem Zielobjekt angeordnet sind. Die Führungsseile können insbesondere seitlich neben der erfindungsgemäßen Verbindungsvorrichtung angeordnet sein, d.h. insbesondere auf der linken und rechten Seite in Längsrichtung neben der Verbindungsvorrichtung. Die Führungsseile dienen dabei vorzugsweise zum Regeln bzw. zum Nachregeln der Bewegungsspur des Zielobjekts und/oder zum Heranziehen des Zielobjektes an das Zugfahrzeug, beispielsweise im Falle eines kollisionsbehafteten Fahrversuches. Die Führungsseile dienen weiterhin insbesondere nicht zur Übertragung von Beschleunigungskräften vom Zugfahrzeug auf das Zielobjekt.

Weitere Vorteile sowie optionale Ausgestaltungen gehen aus der Beschreibung und den Zeichnungen hervor. Ausführungsbeispiele sind in den Zeichnungen vereinfacht dargestellt und in der nachfolgenden Beschreibung näher erläutert.

Es zeigt
- Figur 1:: eine bevorzugte Ausgestaltung der erfindungsgemäßen Testanordnung.
- Figur 2:: die erfindungsgemäße Testanordnung aus Fig.1 in Ausgestaltung mit Führungsseilen.
- Figur 3:: unterschiedliche Ausgestaltungen der erfindungsgemäßen Vorrichtung zum Verbinden eines Zielobjektes mit einem Zugfahrzeug.
- Figur 4:: eine weitere Darstellung der erfindungsgemäßen Testanordnung aus Fig. 1 aus einer anderen Perspektive.
- Figur 5:: eine vorteilhafte Ausgestaltung der erfindungsgemäßen Vorrichtung zum Verbinden eines Zielobjektes mit einem Zugfahrzeug.
- Figur 6:: Ausgestaltung und Verhalten der erfindungsgemäßen Testanordnung während eines Fahrversuchs

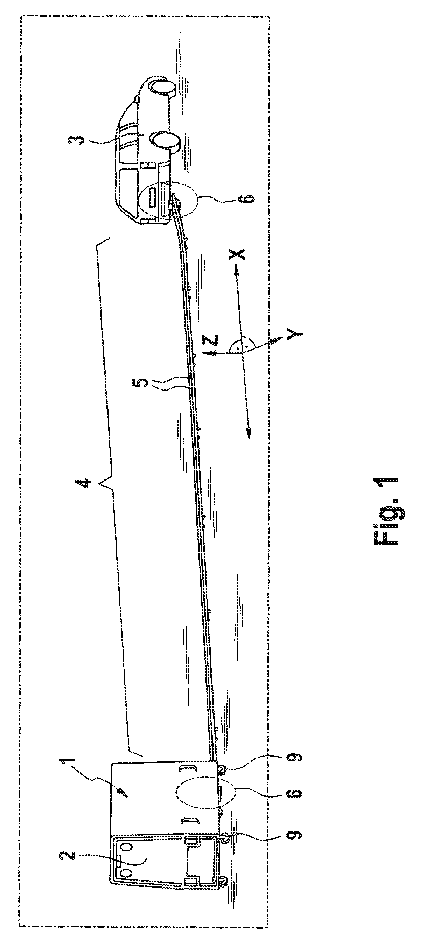

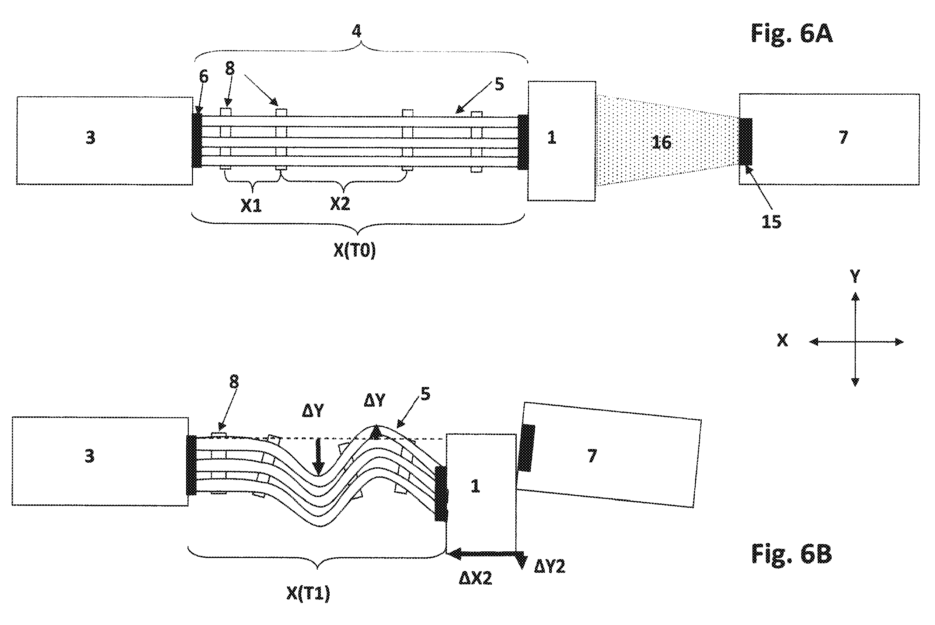

Fig. 1 zeigt eine bevorzugte Ausgestaltung der erfindungsgemäßen Testanordnung. Die Testanordnung dient zur Durchführung von Fahrversuchen zwischen einem Testfahrzeug 7 (in Fig. 1 nicht, aber in Fig. 6 dargestellt) und einem Zielobjekt 1, insbesondere von kollisionsnahen und kollisionsbehafteten Fahrversuchen. Bei dem Zielobjekt 1 handelt es sich in diesem Fall um eine Fahrzeugattrappe. Die Fahrzeugattrappe ist im Wesentlichen als rechteckiger Körper aufgebaut, der an wenigstens einer Seite, vorzugsweise der Rückseite 2 fahrzeugspezifische Merkmale aufweist. Bei den fahrzeugspezifischen Merkmalen kann es sich beispielsweise um Reflektoren, Leuchteinrichtungen und/oder ein Kfz-Kennzeichen handeln. Die Testanordnung umfasst neben dem Zielobjekt 1 weiterhin ein Zugfahrzeug 3. Bei dem Zugfahrzeug 3 handelt es sich in diesem Fall um einen Personenkraftwagen. Das Zielobjekt 1 und das Zugfahrzeug 3 sind mittels einer erfindungsgemäßen Verbindungsvorrichtung 4 miteinander verbunden. Die Vorrichtung 4 umfasst erfindungsgemäß wenigstens einen deformierbaren Schlauch 5, der endseitig 6 über geeignete Mittel mit dem Zugfahrzeug 3 und dem Zielobjekt 1 verbunden ist. In diesem Fall umfasst die Vorrichtung 4 zwei Schläuche 5, insbesondere zwei Druckschläuche bzw. Gewebeschläuche, deren Innenvolumen pneumatisch mit Druckluft beaufschlagt sind. Die Schläuche 5 sind in Längsrichtung X parallel zueinander angeordnet und quer (Y) zur Längsrichtung X mittels mehrerer steifer Verbindungselemente 8 (in Fig. 1 nicht näher dargestellt) miteinander verbunden. Die Verbindungselemente 8 sind dabei in Längsrichtung X beabstandet zueinander zwischen den deformierbaren Schläuchen 5 angeordnet und umfassen jeweils Laufrollen 11, welche dazu dienen, ein Aufliegen und Durchscheuern der Schläuche 5 auf dem Fahrbahnuntergrund zu vermeiden.

Im Rahmen von Fahrversuchen kann mittels der erfindungsgemäßen Testanordnung das Zielobjekt 1 mittels der erfindungsgemäßen Verbindungsvorrichtung 4 hinter dem Zugfahrzeug 3 hergezogen werden. Die Vorrichtung 4 dient dabei im Wesentlichen zur Übertragung von Beschleunigungskräften vom Zugfahrzeug 3 auf das Zielobjekt 1. Weiterhin kann ein Testfahrzeug 7, beispielsweise ebenfalls ein Personenkraftwagen, hinter dem Zielobjekt 1 herfahren, wobei das Testfahrzeug 7 mit einem oder mehreren Sensoren zur Umgebungserfassung 15, bspw. einem Radarstrahlen 16 aussendenden Radarsensor sowie entsprechenden Assistenzsystemen, z.B. mit einem (Not-) Bremsassistenten und/oder Ausweichassistenten, ausgestattet ist. Mittels der erfindungsgemäßen Testanordnung ist es so möglich kollisionsnahe und kollisionsbehaftete Fahrsituationen zwischen dem Testfahrzeug und dem Zielobjekt 1 nachzubilden und die Reaktion der Assistenzsysteme des Testfahrzeugs zu untersuchen.

Wesentliche Vorteile der erfindungsgemäßen Testanordnung und der erfindungsgemäßen Verbindungsvorrichtung 4 bestehen darin, insbesondere aufgrund der Verwendung von mit Druck beaufschlagten Schläuchen 5, dass die Vorrichtung 4 ausreichend steif ist, um sowohl Verzögerungen als auch Beschleunigungen des Zugfahrzeugs 3 auf das Zielobjekt 1 zu übertragen, aber dennoch elastisch genug, um im Falle einer Kollision des Testfahrzeugs mit dem Zielobjekt 1 weg zu knicken, wie Fig. 6 am besten veranschaulicht. Dadurch können insbesondere bei kollisionsbehaften Fahrversuchen hohe Aufprallkräfte abfangen und kompensiert werden, wobei vorzugsweise keine Schäden am Testfahrzeug und Zielobjekt 1 entstehen. Das trägt gleichzeitig dazu bei, dass die Gefahren für die Fahrer vom Zugfahrzeug 3 und Testfahrzeug reduziert werden. Durch das Zusammenschieben der Vorrichtung 4 ist ein Verlassen der Fahrspur durch das Testfahrzeug gefahrlos möglich, insbesondere auch noch nach einer erfolgten Kollision. Durch das Zusammenschieben der Verbindungsvorrichtung 4 verbleiben keine Elemente unter dem Testfahrzeug, wie es z.B. bei den bekannten Systemen der Fall ist. Die weiteren wesentlichen Vorteile der erfindungsgemäßen Testanordnung und der erfindungsgemäßen Verbindungsvorrichtung 4 wurden eingangs der Beschreibung bereits erwähnt und sollen an dieser Stelle nicht wiederholt werden. Der Abstand in Längsrichtung X und damit die Länge der Vorrichtung 4 kann beliebig ausgestaltet sein und, wie in Figur 1 dargestellt, beispielweise 15 m betragen.

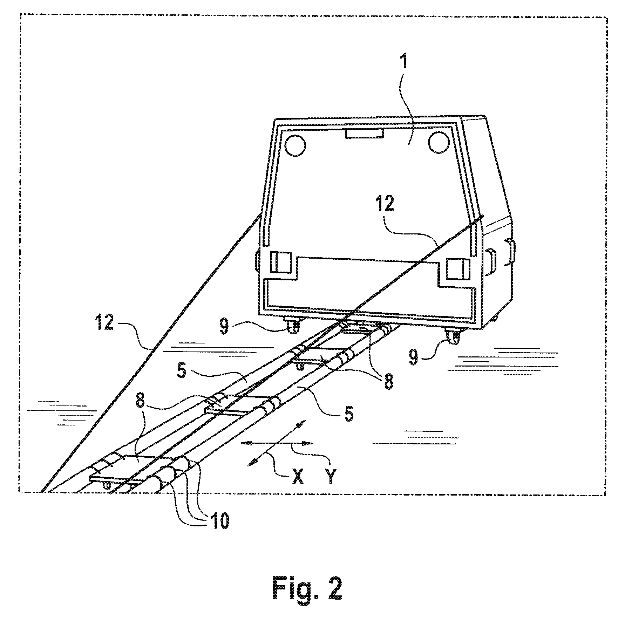

Fig. 2 ist eine detailliertere Darstellung eines Teils der erfindungsgemäßen Testanordnung aus Fig. 1. Gezeigt ist das Zielobjekt 1, welches auf Laufrollen 9 angeordnet und mit der erfindungsgemäßen Verbindungsvorrichtung 4 verbunden ist. Die Vorrichtung 4, zum Verbinden des Zielobjektes 1 mit dem Zugfahrzeug 3 (in Fig. 2 nicht dargestellt), umfasst gemäß der Beschreibung zu Fig. 1 in diesem Fall zwei deformierbare Schläuche 5, die mit Druckluft beaufschlagt sind. Die Schläuche 5 sind in Längsrichtung X, d.h. entlang ihrer Länge, parallel zueinander angeordnet und mittels mehrerer Verbindungselemente 8 miteinander verbunden. Die Verbindungselemente 8 sind in Fig. 2 als bspw. Holzbretter ausgestaltet, die über Kabelbinder 10 mit den Schläuchen 5 verbunden sind. Die Verbindungselemente 8 umfassen weiterhin Laufrollen 11.

Zusätzlich zu Fig. 1 zeigt Fig. 2 eine vorteilhafte Ausgestaltung der erfindungsgemäßen Testanordnung, nämlich wie eine zusätzliche Spurführung des Zielobjekts 1 durch zwei oder mehr seitliche Führungsseile 12 erreicht werden kann. Die Führungsseile 12 sind auf beiden Seiten neben den Schläuchen 5 der Verbindungsvorrichtung 4 angeordnet. Durch Ziehen an einem der beiden Führungsseile 12 ist eine zusätzliche Führung sowie ein Nachregeln des Zielobjekts 1 bzw. dessen Bewegungsspur möglich. Auch ein Heranziehen des Zielobjektes 1 an das Zugfahrzeug 3 über die Führungsseile 12 ist ebenfalls möglich, beispielsweise um das Zielobjekt 1 aus dem Kollisionsbereich zu bringen.

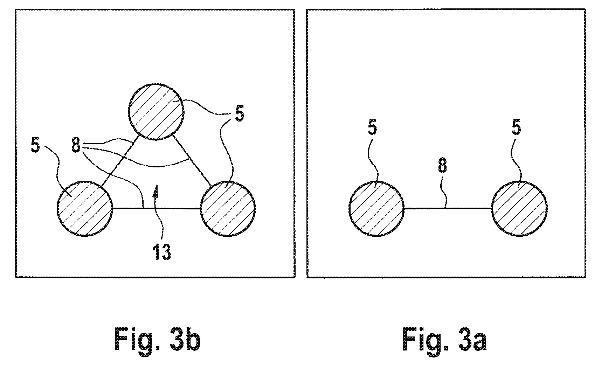

Figur 3 zeigt schematisch zwei unterschiedliche Ausgestaltungsmöglichkeiten der erfindungsgemäßen Vorrichtung 4 zum Verbindung eines Zielobjektes 1 mit einem Zugfahrzeug 3. Dargestellt ist wie die Schläuche 5, betrachtet in der Ebene quer zur Längsrichtung X, d.h. quer zur Länge der Schläuche 5, zueinander angeordnet sein können. In der linken Darstellung sind drei Schläuche 5 derart zueinander angeordnet, dass die Schläuche 5 in der Ebene quer zur Längsrichtung X ein angenommenes (imaginäres) Dreieck 13 aufspannen, wobei die Schläuche 5 in diesem Fall die Eckpunkte des Dreiecks 13 darstellen. In der rechten Darstellung sind zwei Schläuche 5 derart zueinander angeordnet, dass diese nebeneinander, d.h. in gleicher Höhe bzw. im gleichen Abstand zum Fahrbahnuntergrund, angeordnet sind.

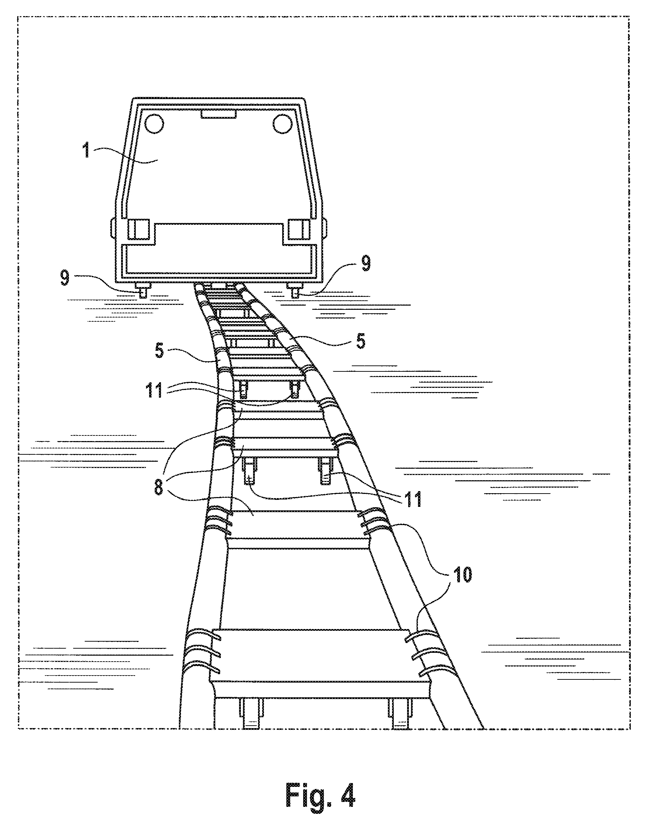

Figur 4 zeigt nochmals die erfindungsgemäße Testanordnung aus Fig. 1 bzw. Figur 2 aus einer anderen Perspektive. Die Testanordnung ist dabei entsprechend der Beschreibung zu den Figuren 1 und 2 aufgebaut.

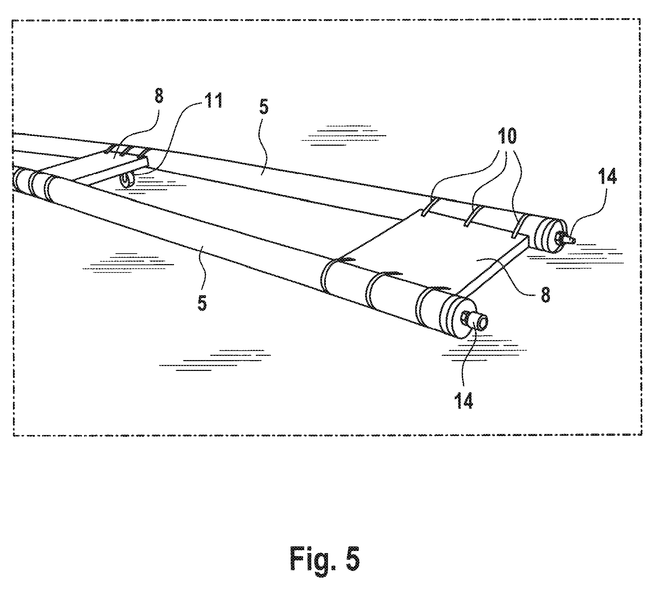

Figur 5 zeigt eine Ausgestaltung der erfindungsgemäßen Vorrichtung 4 zum Verbinden eines Zielobjektes 1 mit einem Zugfahrzeug 3. Die Vorrichtung 4 ist dabei entsprechend der Beschreibung zu den Figuren 1 und 2 aufgebaut. Detaillierter dargestellt sind dabei in Fig. 5 die zwei Schläuche 5, welche Ventile bzw. Verschlusselemente 14 aufweisen, über welche die Schläuche 5 pneumatisch oder hydraulisch mit Druck beaufschlagt werden können.

Die Figuren 6A und 6B skizzieren das Verhalten während eines Fahrversuchs vor (Fig. 6A) und bei (Fig.6B) eintretender Kollision des Testfahrzeugs 7 mit dem Zielobjekt 1. In diesem Ausführungsbeispiel sind 3 Schläuche 5 in einer dreieckssäumigen Querschnittsanordnung gemäß Figur 3B vorgesehen und werden über hier insgesamt 4 Verbindungselemente 8 gehalten, wobei der Abstand X1, X2 zwischen den Verbindungselementen 8 unterschiedlich ist und sich insgesamt eine Gesamtlänge X(T0) zwischen dem Zugfahrzeug 3 und dem Zielobjekt 1 ergibt. Das Testfahrzeug 7 kommt mit seinem Umgebung erfassen Sensor 15 und dem Fahrerassistenzsysteme in den Nahbereich des Zielobjektes 1 und erfasst dieses, wie durch die Strahlen 16 skizziert werden soll. Die Differenzgeschwindigkeit des Testfahrzeugs 7 sei in diesem Fall jedoch gegenüber dem Zugfahrzeug 3 so hoch, dass die eingeleiteten Schutzmaßnahmen nicht ausreichen und es zu einer Kollision des Testfahrzeugs 7 nebst dem Zielobjekt 1 kommt. Es sei nochmals ausdrücklich darauf hingewiesen, dass eine solche Kollision im normalen Betrieb des Fahrzeugs gerade vermieden werden soll, in den hier vorliegenden Fahrversuchen jedoch beispielsweise durch bewusstes Übersteuern der Eingriffe des Assistenzsystems gezielt herbeigeführt wird, um die Reaktionen der Assistenzsysteme gerade auch unmittelbar vor und während einer solchen Kollision auch testen zu können.

Wie nun gerade die Figur 6B deutlich zeigt, kommt es durch den Aufprall des Testfahrzeugs 7 zu einer Überschreitung der vorgegebenen Belastung der Schläuche 5 und damit einen Einknicken bzw. Wegschieben der Schläuche 5 in Querrichtung, hier als ΔY skizziert und kann dadurch das Zielobjekt 1 sowohl in Längsrichtung ΔX2 und Querrichtung ΔY2 ausweichen, indem sich insbesondere die Gesamtlänge X(T1) der Vorrichtung 4 durch dieses Zusammenschieben entsprechend reduziert. Dadurch treten beim Aufprall des Testfahrzeugs 7 auf das Zielobjekt 1 auch nur sehr geringe zusätzliche Kräfte auf diese Objekte auf und können da her größere Beschädigungen vermieden werden.

### Bezeichnungsliste

- 1: Zielobjekt
- 2: Seitenwand des Zielobjektes
- 3: Zugfahrzeug
- 4: Verbindungsvorrichtung
- 5: deformierbarer Schlauch
- 6: endseitige Verbindung
- 7: Testfahrzeug
- 8: Verbindungselement
- 9: Laufrollen (Zielobjekt)
- 10: Kabelbinder
- 11: Laufrollen (Verbindungselemente)
- 12: Führungsseil
- 13: angenommenes Dreieck
- 14: Verschlusselemente
- 15: Umgebungserfassungssensorik des Fahrerassistenzsystems
- 16: Strahlen der Umgebungserfassungssensorik
- X: Längsrichtung/Fahrtrichtung
- Y: Querrichtung/Querachse
- Z: Hochachse

## Patentansprüche

1. **Vorrichtung** (4) zum Verbinden eines Zielobjektes (1) mit einem Zugfahrzeug (3)zum Funktionstest eines Fahrerassistenzsystems eines Testfahrzeuges (7) zur Durchführung von Fahrversuchen, insbesondere von kollisionsnahen und kollisionsbehafteten Fahrversuchen, umfassend wenigstens einen deformierbaren Schlauch (5), der endseitig (6) über geeignete Mittel mit dem Zugfahrzeug (3) und dem Zielobjekt (1) verbindbar ist und im Wesentlichen zur Übertragung von Beschleunigungskräften vom Zugfahrzeug (3) auf das Zielobjekt (1) dient, wobei
ein Innenvolumen des wenigstens einen deformierbaren Schlauchs (5) hydraulisch oder pneumatisch mit Druck beaufschlagbar ist,
umfassend wenigstens zwei deformierbare Schläuche (5), die quer (Y) zur Längsrichtung (X) mittels wenigstens eines Verbindungselements (8) miteinander verbunden sind.

2. Vorrichtung (4) nach einem der vorangegangenen Ansprüche, die Schläuche in Längsrichtung (X) zumindest abschnittsweise parallel zueinander angeordnet sind.

3. Vorrichtung (4) nach einem der Ansprüche 1 oder 2, umfassend drei deformierbare Schläuche (5), wobei die deformierbaren Schläuche (5) derart zueinander angeordnet sind, dass die deformierbaren Schläuche (5) in der Ebene (Y-Z) quer zur Längsrichtung (X) eine Dreiecksform (13) ergeben.

4. Vorrichtung (4) nach Anspruch 2 oder 3,
**dadurch gekennzeichnet, dass**
die deformierbaren Schläuche (5) mittels mehrerer Verbindungselemente (8) quer zur Längsrichtung (7) verbunden sind, wobei
die Verbindungselemente (8) in Längsrichtung (7) in vorgegebenen Abständen (X1,X2) zueinander angeordnet sind.

5. Vorrichtung (4) nach einem der Ansprüche,
**dadurch gekennzeichnet, dass**
wenigstens eines der Verbindungselemente (8) mit Laufrollen (11) und/oder Gleitelementen zur Fahrbahn hin ausgestaltet sind.

6. Testanordnung zum Funktionstest eines
Fahrerassistenzsystems eines Testfahrzeuges (7) zur Durchführung von Fahrversuchen, insbesondere von kollisionsnahen und kollisionsbehafteten Fahrversuchen zwischen dem Testfahrzeug (7) und dem Zielobjekt (1), umfassend ein Zugfahrzeug (3) und ein Zielobjekt (1),
**dadurch gekennzeichnet, dass**
das Zielobjekt (1) mittels einer Vorrichtung (4) nach einem der vorangegangenen Ansprüche mit dem Zugfahrzeug (3) verbunden ist.

7. Testanordnung nach Anspruch 6, **dadurch gekennzeichnet, dass**
zusätzlich zwei oder mehr Führungsseile (12) zwischen dem Zugfahrzeug (3) und dem Zielobjekt (1) angeordnet sind.

8. Testanordnung nach einem der Ansprüche 6 oder 7, **dadurch gekennzeichnet, dass**
die Schläuche (5) bis zu einer vorgegebenen Belastung steif bezüglich Zug- und/oder Druckbelastungen zwischen Zugfahrzeug (3) und Zielobjekt (1) sind,
bei einer Überschreitung dieser vorgegebenen Belastung, insbesondere einem entsprechend starken Aufprall des Testfahrzeugs (7) auf das Zielobjekt (1, die Vorrichtung (4) so ausgebildet ist dass es jedoch zu einem Stauchen der Vorrichtung (4) in Fahrtrichtung (X) durch Knicken und/oder Biegen der Schläuche (5) in Querrichtung (Y) zur Fahrtrichtung (X) kommt.

## Claims

1. **A device** (4) for connecting a target object (1) to a towing vehicle (3) for functional testing of a driver assistance system of a test vehicle (7) for carrying out test drives, in particular for near-collision and collision test drives, comprising at least one deformable hose (5) which can be connected at the ends thereof (6) to said towing vehicle (3) and said target object (1) via suitable means, and which serves substantially to transmit acceleration forces from said towing vehicle (3) to said target object (1), wherein
an inner volume of said at least one deformable hose (5) can be hydraulically or pneumatically pressurized, comprising at least two deformable hoses (5) which are connected to one another transversely (Y) to the longitudinal direction (X) by means of at least one connecting element (8).

2. The device (4) according to any one of the preceding claims, wherein said hoses are arranged parallel to one another at least in sections in longitudinal direction (X).

3. The device (4) according to any one of claims 1 or 2, comprising three deformable hoses (5), wherein said deformable hoses (5) are arranged with respect to one another such that said deformable hoses (5) produce a triangular form (13) in the plane (Y-Z) transverse to said longitudinal direction (X).

4. The device (3) according to claim 2 or 3,
**characterized in that** said deformable hoses (5) are connected by means of a plurality of connecting elements (8) transverse to said longitudinal direction (7), wherein said connecting elements (8) are arranged at predefined distances (X1, X2) from one another in longitudinal direction (7).

5. The device (4) according to any one of the claims,
**characterized in that**
at least one of said connecting elements (8) is developed with guide rollers (11) and/or sliding elements oriented toward the carriageway.

6. A test arrangement for functional testing of a driver assistance system of a test vehicle (7) for carrying out test drives, in particular for near-collision and collision test drives between said test vehicle (7) and said target object (1), comprising a towing vehicle (3) and a target object (1),
**characterized in that**
said target object (1) is connected to said towing vehicle (3) by means of a device (4) according to any of the preceding claims.

7. The test arrangement according to claim 6, **characterized in that** two or more guide ropes (12) are additionally arranged between said towing vehicle (3) and said target object (1).

8. The test arrangement according to any one of claims 6 or 7,
**characterized in that**
said hoses (5) are rigid with respect to tensile and/or compressive loads between said towing vehicle (3) and said target object (1), up to a predefined load,
when this predefined load is exceeded, in a correspondingly severe collision of said test vehicle (7) with said target object (1), said device (4) is formed such that it compresses in driving direction (X) by buckling and/or bending of said hoses (5) in transverse direction (Y) to said driving direction (X).

## Revendications

1. **Dispositif** (4) destiné à relier un objet cible (1) à un véhicule tracteur (3) afin de tester le fonctionnement d'un système d'assistance à la conduite d'un véhicule d'essai (7) pour l'exécution de tests de conduite, en particulier de tests de conduite s'approchant d'une collision et menant à une collision, comprenant au moins un tuyau déformable (5), lequel est reliable à ses extrémités (6) au véhicule tracteur (3) et à l'objet cible (1) par des moyens adaptés, et sert essentiellement au transfert de forces d'accélération du véhicule tracteur (3) à l'objet cible (1), un volume intérieur dudit au moins un tuyau déformable (5) pouvant être soumis à une pression hydraulique ou pneumatique,
comprenant au moins deux tuyaux déformables (5), lesquels sont reliés l'un à l'autre par au moins un élément de raccordement (8) transversalement (Y) au sens de la longueur (X).

2. Dispositif (4) selon l'une quelconque des revendications précédentes, où les tuyaux sont disposés au moins en partie parallèles l'un à l'autre dans le sens de la longueur (X).

3. Dispositif (4) selon la revendication 1 ou la revendication 2, comprenant trois tuyaux déformables (5), lesdits tuyaux déformables (5) étant disposés l'un par rapport aux autres de telle manière que les tuyaux déformables (5) présentent une forme en triangle (13) sur le plan (Y-Z) transversalement au sens de la longueur (X).

4. Dispositif (4) selon la revendication 2 ou la revendication 3,
**caractérisé**
**en ce que** les tuyaux déformables (5) sont reliés par plusieurs éléments de raccordement (8) transversalement au sens de la longueur (7),
lesdits éléments de raccordement (8) étant disposés à intervalle (X1, X2) définis dans le sens de la longueur (7).

5. Dispositif (4) selon l'une quelconque des revendications,
**caractérisé**
**en ce qu'**au moins un des éléments de raccordement (8) est prévu avec des roulettes (11) et/ou des éléments de glissement sur la chaussée.

6. Dispositif de test permettant de tester le fonctionnement d'un système d'assistance à la conduite d'un véhicule d'essai (7) pour l'exécution de tests de conduite, en particulier de tests de conduite s'approchant d'une collision et menant à une collision entre le véhicule d'essai (7) et l'objet cible (1), comprenant un véhicule tracteur (3) et un objet cible (1),
**caractérisé en ce que**
l'objet cible (1) est relié au véhicule tracteur (3) par un dispositif (4) selon l'une des revendications précédentes.

7. Dispositif de test selon la revendication 6, **caractérisé en ce qu'**au moins deux câbles de guidage (12) sont disposés en complément entre le véhicule tracteur (3) et l'objet cible (1).

8. Dispositif de test selon la revendication 6 ou la revendication 7, **caractérisé en ce que**
les tuyaux (5) restent rigides entre le véhicule tracteur (3) et l'objet cible (1) sous les contraintes de traction et/ou de pression jusqu'à une contrainte définie,
et **en ce qu'**en cas de dépassement de cette contrainte définie, en particulier d'un choc de force correspondante entre le véhicule d'essai (7) et l'objet cible (1), le dispositif est formé de manière à entraîner toutefois une compression du dispositif (4) dans le sens de conduite (X) par pliage et/ou flexion des tuyaux (5) dans le sens transversal (Y) au sens de conduite (X).
